(19) Europäisches Patentamt
European Patent Office
Office européen des brevets

(11) EP 1 039 807 B1

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(21) Anmeldenummer: **98966338.0**

(22) Anmeldetag: **15.12.1998**

(51) Int Cl.[7]: **A01N 43/40**
// A01N43:40, A01N37:34

(86) Internationale Anmeldenummer:
**PCT/EP98/08226**

(87) Internationale Veröffentlichungsnummer:
**WO 99/031983 (01.07.1999 Gazette 1999/26)**

(54) **FUNGIZIDE MISCHUNGEN AUF DER BASIS VON PYRIDINAMIDEN UND CHLOROTHALONIL**
FUNGICIDE MIXTURES BASED ON PYRIDINE AMIDES AND CHLOROTHALONIL
MELANGES FONGICIDES A BASE D'AMIDES DE PYRIDINE ET DE CHLOROTHALONILE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.12.1997 DE 19756385**

(43) Veröffentlichungstag der Anmeldung:
**04.10.2000 Patentblatt 2000/40**

(73) Patentinhaber: **BASF AKTIENGESELLSCHAFT**
**67056 Ludwigshafen (DE)**

(72) Erfinder:
- **SCHELBERGER, Klaus**
**D-67161 Gönnheim (DE)**
- **SCHERER, Maria**
**D-76829 Landau (DE)**
- **EICKEN, Karl**
**D-67157 Wachenheim (DE)**
- **HAMPEL, Manfred**
**D-67435 Neustadt (DE)**
- **AMMERMANN, Eberhard**
**D-64646 Heppenheim (DE)**
- **LORENZ, Gisela**
**D-67434 Neustadt (DE)**
- **STRATHMANN, Siegfried**
**D-67117 Limburgerhof (DE)**

(56) Entgegenhaltungen:
**EP-A- 0 256 503** **EP-A- 0 545 099**
**WO-A-97/10716** **WO-A-97/39628**
**FR-A- 2 433 907**

- **DATABASE WPI Section Ch, Week 8206 Derwent Publications Ltd., London, GB; Class C02, AN 82-10635E XP002100770 & JP 56 167605 A (NIHON NOYAKU CO LTD) , 23. Dezember 1981**
- **DATABASE WPI Section Ch, Week 8242 Derwent Publications Ltd., London, GB; Class C03, AN 82-89538E XP002100771 & JP 57 149204 A (KUMIAI CHEM IND CO LTD) , 14. September 1982**
- **DATABASE WPI Section Ch, Week 7936 Derwent Publications Ltd., London, GB; Class A60, AN 79-65606B XP002100772 & JP 54 095728 A (YOSHITOMI PHARM IND KK) , 28. Juli 1979**
- **CHEMICAL ABSTRACTS, vol. 86, no. 9, 28. Februar 1977 Columbus, Ohio, US; abstract no. 51413, K.YOSHII: "Chemical control of bean rust in the Cauca Valley" XP002100769 & FITOPATOLOGIA, Bd. 11, Nr. 1, 1976, Seiten 66-71,**

EP 1 039 807 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen zur Bekämpfung von Schadpilzen sowie Verfahren zur Bekämpfung von Schadpilzen unter Anwendung derartiger Mischungen.

Die WO 97/08952 beschreibt Mischungen aus Amidverbindungen und dem als Akarizid bekannten Wirkstoff Fenazaquin. Diese Mischungen werden als besonders gut wirksam gegen Botrytis beschrieben.

Aus FR-A 2 433 907, JP 56 167 605 A und JP 57 149 204 A sind fungizide Mischungen aus Benzaniliden und Tetrachloroisophthalonitril bekannt. Des weiteren sind in JP 54 095 728 A und in CA 86:51413 fungizide Mischungen von Salicylaniliden bzw. 5,6-Dihydro-2-methyl-N-phenyl-3-carboxamid-1,4-oxathiin-4,4-dioxid und Tetrachloroisophthalonitril beschrieben.

In der EP-A 545 099 schließlich werden Nikotinsäureanilide beschrieben und allgemein erwähnt, dass diese mit anderen fungiziden Wirkstoffen vermischt werden können.

Tetrachlorisophthalonitril (common name: Chlorothalonil), seine Herstellung und seine Wirkung gegen Schadpilze sind bekannt (vgl. "Pesticide Manual", Seite 193).

Aus der EP-A 741 970 sind Mischungen aus Vertretern der Klasse der Strobilurine und Chlorothalonil bekannt.

Der vorliegenden Erfindung lag die Aufgabe zugrunde, weitere Mittel zur Bekämpfung von Schadpilzen und insbesondere für bestimmte Indikationen zur Verfügung zu stellen, die als einen Wirkstoff Chlorothalonil enthalten.

Überraschenderweise wurde nun gefunden, daß diese Aufgabe mit einer Mischung gelöst wird, welche als Wirkstoffe Amidverbindungen der Formel I

$$A\text{-}CO\text{-}NR^1R^2 \qquad I$$

worin

- A für einen der folgenden Gruppen steht: Pyridyl, Thiazolyl oder Pyrazolyl, wobei diese Gruppen 1, 2 oder 3 Substituenten aufweisen können, die unabhängig voneinander ausgewählt sind unter Alkyl, Halogen, Difluormethyl und Trifluormethyl.
- $R^1$ für ein Wasserstoffatom steht;
- $R^2$ für eine Phenylgruppe steht, die 1, 2 oder 3 Substituenten aufweist, die unabhängig voneinander ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe gegebenenfalls mit einem gesättigten 5-gliedrigen Ring kondensiert ist, der gegebenenfalls durch eine oder mehrere Alkylgruppen substituiert ist und/oder ein Heteroatom, ausgewählt unter O und S, aufweisen kann, oder für eine Cycloalkylgruppe, die gegebenenfalls einen der vorstehend genannten Substituenten aufweist,

und als weitere fungizid wirksame Komponente Tetrachlorisophthalonitril II enthält.

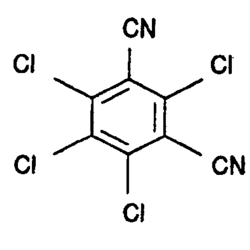

(II)

Die erfindungsgemäßen Mischungen wirken synergistisch und sind daher zur Bekämpfung von Schadpilzen und insbesondere von echten Mehltaupilzen in Gemuse und Reben besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei

um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethan/-oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio, Halogenalkylthio, Alkylsulfinyl und Alkylsulfonyl.

Die Alkenylgruppe umfaßt geradkettige und verzweigte Alkenylgruppen. Vorzugsweise handelt es sich dabei um geradkettige oder verzweigte $C_3$-$C_{12}$-Alkenylgruppen und insbesondere $C_3$-$C_6$-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1 bis 3 Halogenatome auf.

Die Alkinylgruppe umfaßt geradkettige und verzweigte Alkinylgruppen. Vorzugsweise handelt es sich dabei um geradkettige und verzweigte $C_3$-$C_{12}$-Alkinylgruppen und insbesondere $C_3$-$C_6$-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine $C_3$-$C_6$-Cycloalkylgruppe, wie Cyclopropyl, Cyclobutyl, Cyclopentyl oder Cyclohexyl. Wenn die Cycloalkylgruppe substituiert ist, weist sie vorzugsweise 1 bis 3 $C_1$-$C_4$-Alkylreste als Substituenten auf.

Cycloalkenyl steht vorzugsweise für eine $C_4$-$C_6$-Cycloalkenylgruppe, wie Cyclobutenyl, Cyclopentenyl oder Cyclohexenyl. Wenn die Cycloalkenylgruppe substituiert ist, weist sie vorzugsweise 1 bis 3 $C_1$-$C_4$-Alkylreste als Substituenten auf.

Bei einer Cycloalkoxygruppe handelt es sich vorzugsweise um eine $C_5$-$C_6$-Cycloalkoxygruppe, wie Cyclopentyloxy oder Cyclohexyloxy. Wenn die Cycloalkoxygruppe substituiert ist, weist sie vorzugsweise 1 bis 3 $C_1$-$C_4$-Alkylreste als Substituenten auf.

Bei der Cycloalkenyloxygruppe handelt es sich vorzugsweise um eine $C_5$-$C_6$-Cycloalkenyloxygruppe, wie Cyclopentyloxy oder Cyclohexyloxy. Wenn die Cycloalkenyloxygruppe substituiert ist, weist sie vorzugsweise 1 bis 3 $C_1$-$C_4$-Alkylreste als Substituenten auf.

Aryl steht vorzugsweise für Phenyl.

Wenn A für einen 5-gliedrigen Heterocyclus steht, handelt es sich insbesondere um einen Thiazolyl- oder Pyrazolylrest.

Wenn A für einen 6-gliedrigen Heterocyclus steht, handelt es sich dabei um einen Pyridylrest, insbesondere einen 3-Pyridylrest.

Die erwähnten heterocyclischen Reste können gegebenenfalls 1, 2 oder 3 der oben genannten Substituenten aufweisen, wobei diese Substituenten vorzugsweise unabhängig voneinander ausgewählt sind unter Alkyl, Halogen, Difluormethyl oder Trifluormethyl.

Besonders bevorzugt steht A für einen Rest der Formeln:

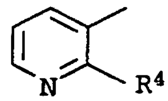

(A2)

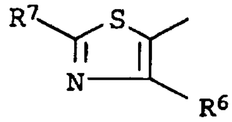

(A5)

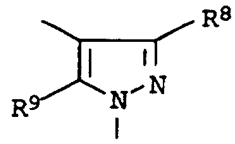

(A7)

worin $R^4$, $R^6$, $R^7$, $R^8$ und $R^9$ unabhängig voneinander für Wasserstoff, Alkyl, insbesondere Methyl, Halogen, insbesondere Chlor, $CHF_2$ oder $CF_3$ stehen.

Der Rest $R^1$ in der Formel I steht vorzugsweise für ein Wasserstoffatom.

Der Rest $R^2$ in der Formel I steht vorzugsweise für einen Phenylrest. Vorzugsweise weist $R^2$ mindestens einen Substituenten auf, der insbesondere bevorzugt in 2-Stellung vorhanden ist. Vorzugsweise ist der Substituent (oder sind die Substituenten) ausgewählt unter Alkyl, Cycloalkyl, Cycloalkenyl, Halogen oder Phenyl.

Die Substituenten des Restes $R^2$ können ihrerseits wieder substituiert sein. Die aliphatischen oder cycloaliphatischen Substituenten können dabei partiell oder vollständig halogeniert, insbesondere fluoriert oder chloriert, sein. Vorzugsweise weisen sie 1, 2 oder 3 Fluor- oder Chloratome auf. Wenn der Substituent des Restes $R^2$ eine Phenylgruppe ist, so kann diese vorzugsweise mit 1 bis 3 Halogenatomen, insbesondere Chloratomen, und/oder mit einem Rest substituiert sein, der vorzugsweise ausgewählt ist unter Alkyl und Alkoxy. Besonders bevorzugt ist die Phenylgruppe mit einem Halogenatom in p-Position substituiert, d.h. der besonders bevorzugte Substituent des Restes $R^2$ ist ein p-halogensubstituierter Phenylrest. Der Rest $R^2$ kann auch mit einem gesättigten 5-gliedrigen Ring kondensiert sein, wobei dieser Ring seinerseits 1 bis 3 Alkylsubstituenten aufweisen kann.

$R^2$ steht dann beispielsweise für Indanyl, Thiaindanyl und Oxaindanyl. Bevorzugt sind Indanyl und 2-Oxaindanyl, die insbesondere über die 4-Stellung an das Stickstoffatom gebunden sind.

Gemäß einer bevorzugten Ausführungsform enthält das erfindungsgemäße Mittel als Amidverbindung eine Verbindung der Formel I, worin A die folgenden Bedeutungen besitzt:
Pyridyl, Thiazolyl oder Pyrazolyl, wobei diese Gruppen 1, 2 oder 3 Substituenten aufweisen können, die unabhängig voneinander ausgewählt sind unter Alkyl, Halogen, Difluormethyl und Trifluormethyl.

Gemäß einer weiteren bevorzugten Ausführungsform steht A für:

Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;

Phenyl, das gegebenenfalls in 2-Stellung durch Methyl, Trifluormethyl, Chlor, Brom oder Iod substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

1-Methylpyrazol-4-yl, das gegebenenfalls in 3- und/oder 5-Stellung durch Methyl, Chlor, Difluormethyl oder Trifluormethyl substituiert ist; oder

Gemäß einer weiteren bevorzugten Ausführungsform enthalten die erfindungsgemäßen Mittel als Amidverbindung eine Verbindung der Formel I, worin $R^2$ für eine Phenylgruppe steht, die gegebenenfalls substituiert ist durch 1, 2 oder 3 der oben genannten Substituenten.

Gemäß einer weiteren bevorzugten Ausführungsform enthalten die erfindungsgemäßen Mittel als Amidverbindung eine Verbindung der Formel I, worin $R^2$ für eine Phenylgruppe steht, die in 2-Stellung einen der folgenden Substituenten aufweist:

$C_3$-$C_6$-Alkyl, $C_5$-$C_6$-Cycloalkenyl, $C_5$-$C_6$-Cycloalkyloxy, Cycloalkenyloxy, wobei diese Gruppen durch 1, 2 oder 3 $C_1$-$C_4$-Alkylgruppen substituiert sein können,

Phenyl, das durch 1 bis 5 Halogenatome und/oder 1 bis 3 Gruppen, die unabhängig voneinander ausgewählt sind unter $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio, substituiert ist,

Indanyl oder Oxaindanyl, das gegebenenfalls durch 1, 2 oder 3 $C_1$-$C_4$-Alkylgruppen substituiert ist.

Gemäß einer weiteren bevorzugten Ausführungsform enthalten die erfindungsgemäßen Mittel als Amidverbindung eine Verbindung der Formel Ia,

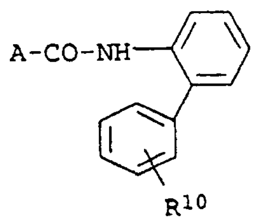

(Ia)

worin

A für

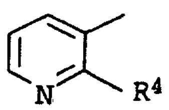

(A2)

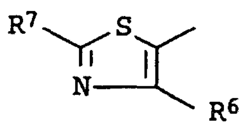

(A5)

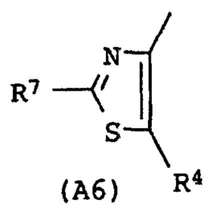

(A6)

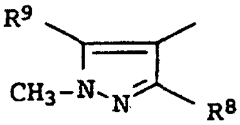

(A7)

steht;

- $R^4$ für Trifluormethyl oder Chlor steht,
- $R^6$ für Methyl, Difluormethyl, Trifluormethyl oder Chlor steht,
- $R^7$ für Wasserstoff, Methyl oder Chlor steht,
- $R^8$ für Methyl, Difluormethyl oder Trifluormethyl steht,
- $R^9$ für Wasserstoff, Methyl, Difluormethyl, Trifluormethyl oder Chlor steht,
- $R^{10}$ für $C_1$-$C_4$-Alkyl, $C_1$-$C_4$-Alkoxy, $C_1$-$C_4$-Alkylthio oder Halogen steht.

Gemäß einer besonders bevorzugten Ausführungsform enthalten die Mittel als Amidverbindung eine Verbindung der Formel Ib

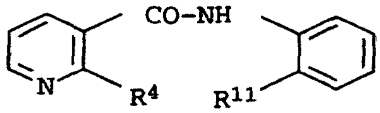

(Ib)

worin

$R^4$ für Halogen steht und
$R^{11}$ für Phenyl steht, das durch Halogen substituiert ist.

Besonders bevorzugt sind Amidverbindungen der nachfolgenden Formeln:

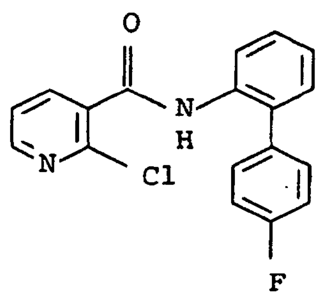

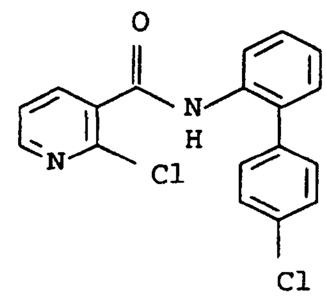

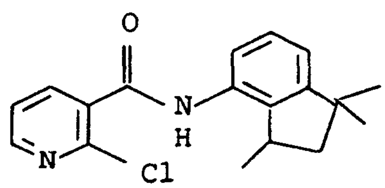

Brauchbare Amidverbindungen der Formel I sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, genügt bereits ein geringer Anteil an Amidverbindung der Formel I. Vorzugsweise setzt werden Amidverbindung I und Tetrachlorisophthalonitril II in einem Gewichtsverhältnis im Bereich von 20:1 bis 1:20, insbesondere 10:1 bis 1:10 eingesetzt.

Die Verbindungen I sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Besonders bevorzugt sind die erfindungsgemäßen Mischungen zur Bekämpfung von echten Mehltaupilzen in Reben- und Gemüsekulturen sowie in Zierpflanzen einsetzbar.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren,

z.B. Lignin-, Phenol-, Naphthalin- und Dibutylnaphthalinsulfonsäure, sowie von Fettsäuren, Alkyl- und Alkylarylsulfonaten, Alkyl-, Laurylether - und Fettalkoholsulfaten, sowie Salze sulfatierter Hexa-, Hepta - und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw, der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieseisäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (**W**) wird nach der Formel von Abbot wie folgt bestimmt:

$$W = (1 - \alpha)\cdot 100/\beta$$

- $\alpha$ entspricht dem Pilzbefall der behandelten Pflanzen in % und
- $\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

- E zu erwartender Wirkungsgrad, ausgedrückt in % der unbehandelten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Anwendungsbeispiel 1 - Wirksamkeit gegen Botryis cinerea an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des Botrytis-Befalls auf den befallenen Fruchtscheiben.

Als Verbindungen der Formel I wurden folgende Komponenten eingesetzt:

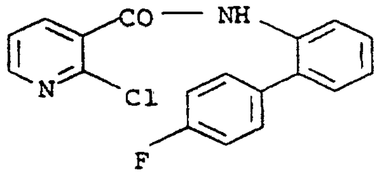

I.1

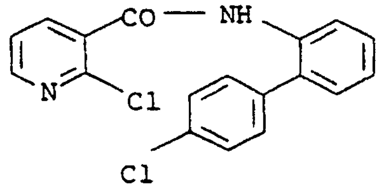

I.2

Die Ergebnisse sind den nachfolgenden Tabellen 1 und 2 zu entnehmen.

Tabelle 1

| Bsp. | Wirkstoff (Gehalt in ppm) | Wirkstoffkonzentration in der Spritzbrühe in ppm | Wirkungsgrad in % der unbehandelten Kontrolle |
|---|---|---|---|
| 1V | unbehandelt | 0 (100 % Befall) | 0 |
| 2V | Verbindung I.1 | 12,5 | 20 |
| 3V | Verbindung I.2 | 50 | 85 |
| 4V | Verbindung 2 | 50 | 0 |
| | | 12,5 | 0 |

Tabelle 2

| Bsp. | erfindungsgemäße Mischungen (Gehalt in ppm) | beobachteter Wirkungsgrad | berechneter Wirkungsgrad*) |
|---|---|---|---|
| 5 | 12,5 ppm I.1 + 12,5 ppm II | 40 | 20 |
| 6 | 50 ppm I.2 + 50 ppm II | 97 | 85 |

*) berechnet nach der Colby-Formel
Aus den Ergebnissen des Versuches geht hervor, daß der beobachtete Wirkungsgrad in allen Mischungsverhältnissen höher ist, als nach der Colby-Formel vorausberechnete Wirkungsgrad

Anwendungsbeispiel 2 - Wirksamkeit gegen Botryis cinerea an Tomaten

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen zoosporenauf schwemmung von Phytophthora infestans infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die Ergebnisse der Versuche sind den Tabellen 3 und 4 zu entnehmen.

Tabelle 3

| Bsp. | Wirkstoff (Gehalt in ppm) | Wirkstoffkonzentration in der Spritzbrühe in ppm | Wirkungsgrad in % der unbehandelten Kontrolle |
|---|---|---|---|
| 7V | Kontrolle (unbehandelt) | (100 % Befall) | 0 |
| 8V | Verbindung I.1 | 0,8 | 0 |
| 9V | Verbindung I.2 | 0,8 | 0 |
| 10V | Verbindung II | 0,8 | 0 |

Tabelle 4

| Bsp. | erfindungsgemäße Mischungen (Gehalt in ppm) | beobachteter Wirkungsgrad | berechneter Wirkungsgrad*) |
|---|---|---|---|
| 11 | 0,8 ppm I.1 + 0,8 ppm II | 50 | 0 |
| 12 | 0,8 ppm I.2 + 0,8 ppm II | 30 | 0 |

*) berechnet nach der Colby-Formel
Aus den Ergebnissen des Versuches geht hervor, daß der beobachtete Wirkungsgrad in allen Mischungsverhältnissen höher ist, als nach der Colby-Formel vorausberechnete Wirkungsgrad

## Patentansprüche

**1.** Fungizide Mischungen, enthaltend als aktive Komponenten

a) eine Amidverpindung der Formel I

$$A\text{-}CO\text{-}NR^1R^2 \qquad I$$

worin

A für einen der folgenden Gruppen steht: Pyridyl, Thiazolyl oder Pyrazolyl, wobei diese Gruppen 1, 2 oder 3 Substituenten aufweisen können, die unabhängig voneinander ausgewählt sind unter Alkyl, Halogen, Difluormethyl und Trifluormethyl.

$R^1$ für ein Wasserstoffatom steht;

$R^2$ für eine Phenylgruppe steht, die 1, 2 oder 3 Substituenten aufweist, die unabhängig voneinander ausgewählt sind uncer Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe gegebenenfalls mit einem gesättigten 5-gliedrigen Ring kondensiert ist, der gegebenenfalls durch eine oder mehrere Alkylgruppen substituiert ist und/oder ein Heteroatom, ausgewählt unter O und S, aufweisen kann, oder für eine Cycloalkylgruppe, die gegebenenfalls einen der vorstehend genannten Substituenten aufweist, und

b) Tetrachloroisophtalonitril II

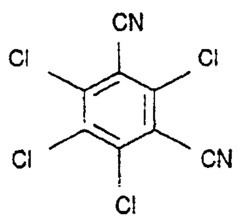

(II)

in einer synergistisch wirksamen Menge.

**2.** Fungizide Mischung nach Anspruch 1, wobei in der Formel I der Rest A für eine der folgenden Gruppen steht:

Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

1-Methylpyrazol-4-yl, das gegebenenfalls in 3- und/oder 5-Stellung durch Methyl, Chlor, Difluormethyl oder Trifluormethyl substituiert ist.

**3.** Fungizide Mischung nach einem der vorhergehenden Ansprüche, welche eine Verbindung der Formel I enthält, worin $R^2$ für eine Phenylgruppe steht, die gegebenenfalls substituiert ist durch 1, 2 oder 3 der in Anspruch 1 genannten Substituenten.

**4.** Fungizide Mischung nach Anspruch 3, wobei $R^2$ für eine Phenylgruppe steht, die in 2-Stellung einen der folgenden Substituenten aufweist:

$C_3$-$C_6$-Alkyl, $C_5$-$C_6$-Cycloalkenyl, $C_5$-$C_6$-Cycloalkyloxy, Cycloalkenyloxy, wobei diese Gruppen durch 1, 2 oder 3 $C_1$-$C_4$-Alkylgruppen substituiert sein können,
Phenyl, das durch 1 bis 5 Halogenatome und/oder 1 bis 3 Gruppen, die unabhängig voneinander ausgewählt sind unter
$C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio, substituiert ist,

oder wobei $R^2$ für Indanyl oder Oxaindanyl steht, das gegebenenfalls durch 1, 2 oder 3 $C_1$-$C_4$-Alkylgruppen substituiert ist.

**5.** Fungizide Mischung nach einem der Ansprüche 1 bis 4, welche eine Amidverbindung der nachfolgenden Formel Ia enthält:

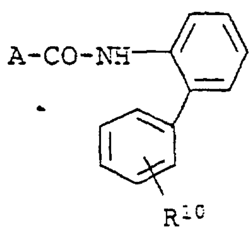

(Ia)

worin

A für

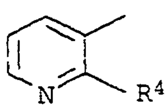

(A2)

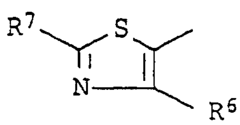

(A5)

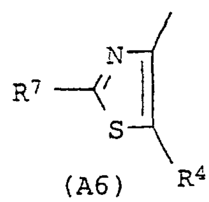

(A6)

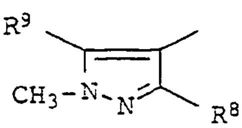

(A7)

steht;

$R^4$ für Trirluormethyl oder Chlor steht,
$R^6$ für Methyl, Difluormethyl, Trifluormethyl oder Chlor steht,
$R^7$ für Wasserstoff, Methyl oder Chlor steht,
$R^8$ für Methyl, Difluormethyl oder Trirluormethyl steht,
$R^9$ für Wasserstoff, Methyl, Difluormethyl, Trifluormethyl oder Chlor steht,
$R^{10}$ für $C_1$-$C_4$-Alkyl, $C_1$-$C_4$-Alkoxy, $C_1$-$C_4$-Alkylthio oder Halogen steht.

**6.** Fungizide Mischung nach einem der Ansprüche 1 bis 5, welche als Amidverbindung eine Verbindung der nachfolgenden Formel Ib enthält:

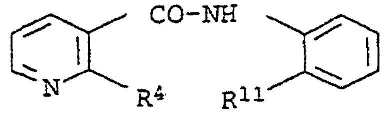

(Ib)

worin

$R^4$ für Halogen steht und
$R^{11}$ für Phenyl steht, das durch Halogen substituiert ist.

**7.** Fungizide Mischung nach Anspruch 1, welche als Amidverbindung eine Verbindung der nachfolgenden Formeln enthält:

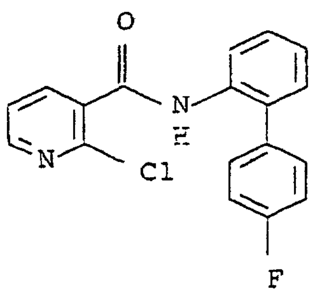

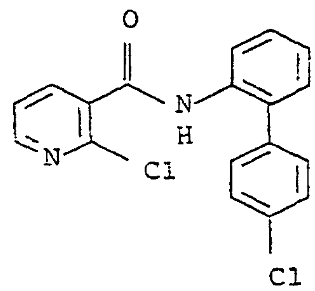

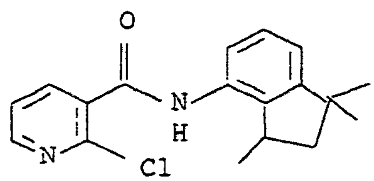

**8.** Fungizide Mischung nach einem der vorhergehenden Ansprüche, welche in zwei Teilen konditioniert ist, wobei der eine Teil die Amidverbindung I in einem festen oder flüssigen Träger enthält und der andere Teil die Verbindung der Formel II in einem festen oder flüssigen Träger enthält.

**9.** Verfahren zur Bekämpfung von Schadpilzen, **dadurch gekennzeichnet, daß** man die Pilze, deren Lebensraum oder die vor Pilzbefall zu schützenden Materialien, Pflanzen, Samen, Böden, Flächen oder Räume mit einer fungiziden Mischung gemäß einem der Ansprüche 1 bis 9 behandelt, wobei die Anwendung der Wirkstoffe Amidverbindung I und der Verbindung der Formel II gleichzeitig, und zwar gemeinsam oder getrennt, oder nacheinander erfolgen kann.

## Claims

**1.** A fungicidal mixture, comprising as active components

a) an amide compound of the formula I

$$A\text{-}CO\text{-}NR^1R^2 \qquad I$$

in which

A is one of the following groups: pyridyl, thiazolyl or pyrazolyl, where these groups may have 1, 2 or 3 substituents which are selected, independently of one another, from alkyl, halogen, difluoromethyl and trifluoromethyl;

$R^1$ is a hydrogen atom;

$R^2$ is a phenyl group which has 1, 2 or 3 substituents which are selected, independently of one another, from alkyl, alkenyl, alkynyl, alkoxy, alkenyloxy, alkynyloxy, cycloalkyl, cycloalkenyl, cycloalkyloxy, cycloalkenyloxy, phenyl and halogen, where the aliphatic and cycloaliphatic radicals may be partially or fully halogenated and/or the cycloaliphatic radicals may be substituted by from 1 to 3 alkyl groups and where the phenyl group may have from 1 to 5 halogen atoms and/or from 1 to 3 substituents which are selected, independently of one another, from alkyl, haloalkyl, alkoxy, haloalkoxy, alkylthio and haloalkylthio, and where the amidic phenyl group may or may not be condensed with a saturated 5-membered ring which may or may not be substituted by one or more alkyl groups and/or may have a hetero atom selected from O and S, or is a cycloalkyl group which may or may not have one of the abovementioned substituents and

b) tetrachloroisophthalonitrile II

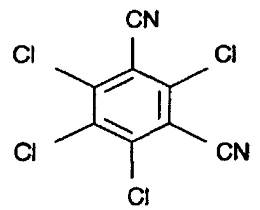

(II)

in a synergistically effective amount.

**2.** A fungicidal mixture as claimed in claim 1, wherein in the formula I the radical A is one of the following groups:

pyridin-3-yl, which may or may not be substituted in the 2-position by halogen, methyl, difluoromethyl, trifluoromethyl, methoxy, methylthio, methylsulfinyl or methylsulfonyl;

thiazol-5-yl, which may or may not be substituted in the 2-and/or 4-position by methyl, chlorine, difluoromethyl or trifluoromethyl;

thiazol-4-yl, which may or may not be substituted in the 2-and/or 5-position by methyl, chlorine, difluoromethyl or trifluoromethyl;

1-methylpyrazol-4-yl, which may or may not be substituted in the 3- and/or 5-position by methyl, chlorine, difluoromethyl or trifluoromethyl.

**3.** A fungicidal mixture as claimed in one of the preceding claims, which comprises a compound of the formula I in which $R^2$ is a phenyl group which may or may not be substituted by 1, 2 or 3 of the substituents mentioned in claim 1.

**4.** A fungicidal mixture as claimed in claim 3, where $R^2$ is a phenyl group which has one of the following substituents in the 2-position:

$C_3$-$C_6$-alkyl, $C_5$-$C_6$-cycloalkenyl, $C_5$-$C_6$-cycloalkyloxy, cycloalkenyloxy, where these groups may be substituted by 1, 2 or 3 $C_1$-$C_4$-alkyl groups,
phenyl which is substituted by from 1 to 5 halogen atoms and/or from 1 to 3 groups which are selected, independently of one another, from $C_1$-$C_4$-alkyl, $C_1$-$C_4$-haloalkyl,
$C_1$-$C_4$-alkoxy, $C_1$-$C_4$-haloalkoxy, $C_1$-$C_4$-alkylthio and $C_1$-$C_4$-haloalkylthio,

or where $R^2$ is indanyl or oxaindanyl which may or may not be substituted by 1, 2 or 3 $C_1$-$C_4$-alkyl groups.

**5.** A fungicidal mixture as claimed in any of claims 1 to 4, which comprises an amide compound of the formula Ia below:

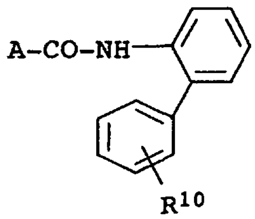

(Ia)

in which

A is

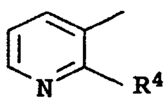

(A2)

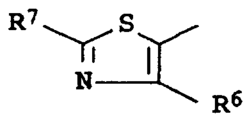

(A5)

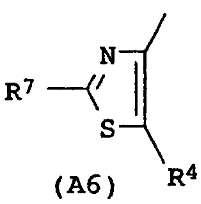

(A6)

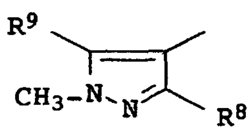

(A7) ;

$R^4$ is trifluoromethyl or chlorine,

$R^6$ is methyl, difluoromethyl, trifluoromethyl or chlorine,

$R^7$ is hydrogen, methyl or chlorine,

$R^8$ is methyl, difluoromethyl or trifluoromethyl,

$R^9$ is hydrogen, methyl, difluoromethyl, trifluoromethyl or chlorine,

$R^{10}$ is $C_1$-$C_4$-alkyl, $C_1$-$C_4$-alkoxy, $C_1$-$C_4$-alkylthio or halogen.

**6.** A fungicidal mixture as claimed in any of claims 1 to 5, which comprises as amide compound a compound of the formula Ib below:

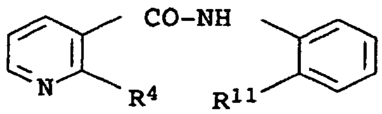

(Ib)

in which

$R^4$ is halogen and

$R^{11}$ is phenyl which is substituted by halogen.

**7.** A fungicidal mixture as claimed in claim 1, which comprises as amide compound a compound of the formulae below:

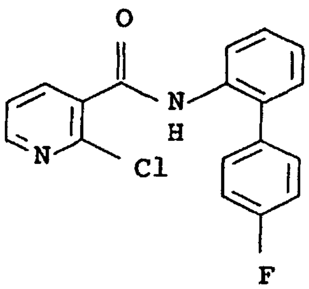

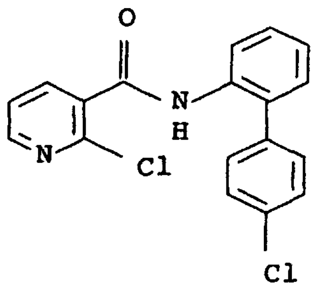

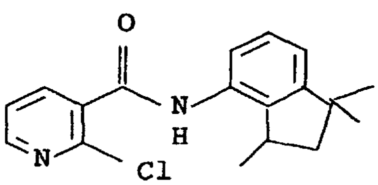

**8.** A fungicidal mixture as claimed in any of the preceding claims, which is conditioned in two parts, one part comprising the amide compound I in a solid or liquid carrier and the other part comprising the compound of the formula II in a solid or liquid carrier.

**9.** A method for controlling harmful fungi, which comprises treating the fungi, their habitat, or the materials, plants, seeds, soils, areas or spaces to be protected against fungal attack with a fungicidal mixture as claimed in any of claims 1 to 8, where the application of the active ingredients amide compound I and the compound of the formula II may be carried out simultaneously, either together or separately, or in succession.

## Revendications

**1.** Mélanges fongicides contenant en tant que composants actifs

a) un amide de formule I

A-CO-NR1R2

dans laquelle

A représente l'un des groupes suivants : pyridyle, thiazolyle ou pyrazolyle, ces groupes pouvant porter un, deux ou trois substituants choisis, indépendamment les uns des autres, parmi les groupes alkyle, les halogènes, les groupes difluorométhyle et trifluorométhyle,

R1 représente un atome d'hydrogène

R2 représente un groupe phényle portant un, deux ou trois substituants choisis indépendamment les uns des autres parmi les groupes alkyle, alcényle, alcynyle, alcoxy, alcényloxy, alcynyloxy, cycloalkyle, cycloalcényle, cycloalcoxy, cyclo alcényloxy, phényle et les halogènes, les groupes aliphatiques et cycloaliphatiques pouvant être halogénés en totalité ou en partie et/ou les groupes cycloaliphatiques pouvant porter un à trois substituants alkyle, le groupe phényle pouvant porter un à cinq atomes d'halogènes et/ou un à trois substituants choisis, indépendamment les uns des autres, parmi les groupes alkyle, halogénoalkyle, alcoxy, halogénoalcoxy, alkylthio et halogénoalkylthio, le groupe phényle amidique étant le cas échéant condensé avec un cycle saturé à cinq chaînons qui le cas échéant porte un ou plusieurs substituants alkyle et/ou peut contenir un hétéroatome choisi parmi 0 et S, ou un groupe cycloalkyle portant le cas échéant l'un des substituants mentionnés ci-dessus, et

b) le tétrachloroisophtalonitrile II

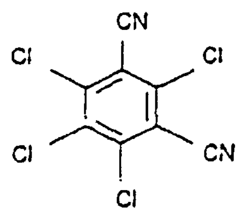

(II)

en quantité synergétique efficace.

**2.** Mélange fongicide selon la revendication 1, pour lequel, dans la formule I, le groupe A est des groupes suivants :

pyridin-3-yle éventuellement substitué en position 2 par un halogène, un groupe méthyle, difluorométhyle, trifluorométhyle, méthoxy, méthylthio, méthylsulfinyle ou méthylsulfonyle ;
thiazol-5-yle portant éventuellement des substitutants méthyle, chloro, difluorométhyle ou trifluorométhyle dans les positions 2 et/ou 4 ;
thiazol-4-yle portant éventuellement des substituants méthyle , chloro, difluorométhyle ou trifluorométhyle dans les positions 2 et/ou 5 ;
1-méthylpyrazol-4-yle portant éventuellement des substituants méthyle, chloro, difluorométhyle ou trifluorométhyle dans les positions 3 et/ou 5.

**3.** Mélange fongicide selon l'une des revendications qui précèdent, contenant un composé de formule I dans laquelle R2 représente un groupe phényle portant éventuellement un, deux ou trois des substituants mentionnés dans la revendication 1.

**4.** Mélange fongicide selon la revendication 3, pour lequel R2 représente un groupe phényle portant en position 2 l'un des substituants suivants :

alkyle en C3-C6, cycloalcényle en C5-C6, cycloalcoxy en C5-C6, cycloalcényloxy, ces groupes pouvant porter un, deux ou trois substituants alkyle en C1-C4,
phényle, substitué par un à cinq atomes d'halogènes et/ou un à trois groupes choisis : indépendamment les uns des autres, parmi
les groupes alkyle en C1-C4, halogénoalkyle en C1-C4, alcoxy en C1-C4, halogénoalcoxy en C1-C4, alkylthio en C1-C4 et halogénoalkylthio en C1-C4,

ou bien R2 représente un groupe indanyle ou oxaindanyle portant éventuellement un, deux ou trois substituants alkyle en C1-C4.

**5.** Mélange fongicide selon l'une des revendications 1 à 4, contenant un amide qui répond à la formule Ia ci-après

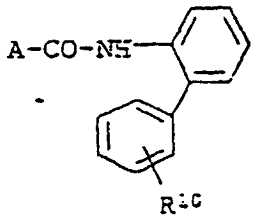

(Ia)

dans laquelle

A représente

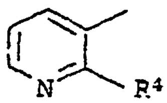

(A2)

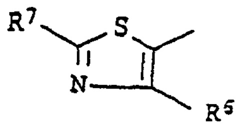

(A5)

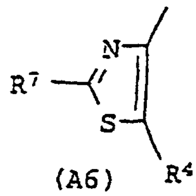

(A6)

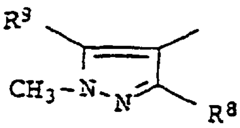

(A7)

R4 représente un groupe trifluorométhyle ou le chlore,
R6 représente un groupe méthyle, difluorométhyle, trifluorométhyle ou le chlore,
R7 représente l'hydrogène, un groupe méthyle ou le chlore,
R8 représente un groupe méthyle, difluorométhyle ou trifluorométhyle,
R9 représente l'hydrogène, un groupe méthyle, difluorométhyle, trifluorométhyle ou le chlore,
R 10 représente un groupe alkyle en C1-C4, alcoxy en C1-C4, alkylthio en C1-C4 ou un halogène.

**6.** Mélange fongicide selon l'une des revendications 1 à 5, contenant, en tant qu'amide, un composé de formule Ib ci-après

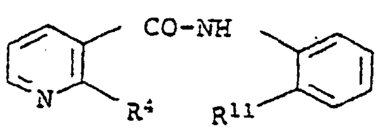

(Ib)

dans laquelle

R4 représente un halogène et
R11 représente un groupe phényle substitué par des halogènes.

**7.** Mélange fongicide selon la revendication 1, contenant en tant qu'amide un composé répondant à l'une des formules ci-après

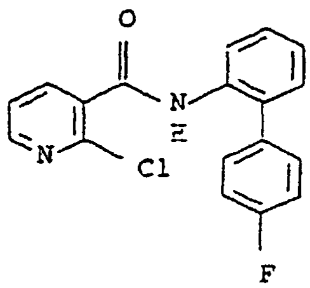

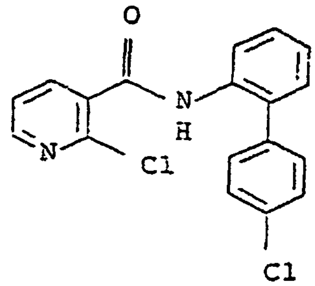

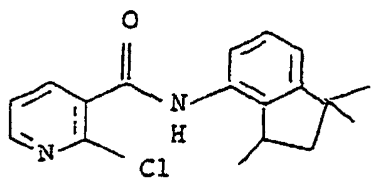

8. Mélange fongicide selon l'une des revendications qui précèdent, conditionné en deux parties, dont l'une contient l'amide I dans un véhicule solide ou liquide et l'autre le composé de formule II dans un véhicule solide ou liquide.

9. Procédé pour combattre les mycètes nuisibles, **caractérisé par le fait que** l'on traite les mycètes, leur habitat ou les matériaux, végétaux, semences, sols, aires ou locaux qu'on veut protéger contre l'attaque par les mycètes par un mélange fongicide selon l'une des revendications 1 à 9, l'application des substances actives : amide I et composé de formule II, pouvant être faite en même temps, ensemble ou séparément, ou successivement.